# EUROPÄISCHE PATENTSCHRIFT

(11) **EP 0 384 236 B1**
(45) Veröffentlichungstag und Bekanntmachung des Hinweises auf die Patenterteilung: **07.01.1993**
(21) Anmeldenummer: 90102538.7
(22) Anmeldetag: 09.02.1990
(51) Int. Cl.: B05B 15/12

(54) **Pulversprühkabine mit einer Leitvorrichtung für Rohgas in eine Abscheider-Saugströmung**
Powder spraying booth with a device for leading crude gas to a suction flow of a separator
Cabine d'atomisation à poudre avec dispositif pour guider le gaz brut dans un courant aspirateur d'un séparateur

(30) Priorität: 18.02.1989 DE 3905057
(43) Veröffentlichungstag der Anmeldung: 29.08.1990
(73) Patentinhaber: ESB ELEKTROSTATISCHE SPRÜH- UND BESCHICHTUNGSANLAGEN G.F. VÖHRINGER GMBH, D-88709 Meersburg (DE)
(72) Erfinder: Vöhringer, Gerhard Friedrich, D-7778 Markdorf (DE)
(74) Vertreter: Braito, Herbert

(56) Entgegenhaltungen:
- EP-B- 0 035 905
- DE-A- 3 229 717
- GB-A- 1 315 671
- US-A- 4 245 551
- US-A- 4 354 451

## Beschreibung

Die Erfindung betrifft eine Pulversprühkabine der im Oberbegriff des Patentanspruchs 1 herausgestellten Gattung.

Bei Pulversprühkabinen dieser Art ist man einmal bestrebt, das Sprühpulver möglichst weit auf annähernd parallelen Bahnen in den Sprühraum einzubringen, um eine Verwirbelung zu vermeiden und die Beschichtung des Werkstückes aus einer laminaren Strömung möglichst gleichförmig bewirken zu können. Aus diesem Grunde werden auf den ganzen Zuführbahnen möglichst alle Wirbelquellen vermieden, um das Gas mit möglichst geringen Richtungsund Geschwindigkeitsänderungen gleichmäßig fördern zu können.

Diese Mittel genügen in der Regel, wenn ein Pulverabscheider in Strömungsrichtung direkt hinter dem Sprühraum angeordnet ist. Es kann jedoch kaum vollständig vermieden werden, daß sich eine begrenzte Menge des nicht am Werkstück niedergeschlagenen Sprühpulvers am Boden ablagert und von dort wieder entfernt werden muß.

Besondere Probleme ergeben sich jedoch, wenn das Rohgas aus dem vorgegebenen Strömungsweg der Kabine abgelenkt werden muß. Dies gilt vor allem für horizontal absaugende Pulversprühkabinen, und dabei besonders Doppelkabinen. Dort entstehen allein schon durch den Umlenkvorgang in den Randbereichen vor allem einer hoch an der Kabinenwand angeordneten Auslaßöffnung Strömungswirbel, die das Pulver zum Teil aus der Kabine austreten lassen und im übrigen den Anteil des Pulverniederschlages am Boden der Sprühkabine steigern.

Dies hat eine Verringerung der umlaufenden Pulvermenge und oftmals eine Verunreinigung des Sprühpulvers, eine Teilvermischung mit Pulver anderer Beschaffenheit und Tönung und damit eine Veränderung des Farbtons zur Folge.

Eine Pulverkabine der eingangs definierten Gattung ist bekannt durch die britische Patentschrift 13 15 671. Dabei werden zwischen Seitenwänden ein wannenförmiger Boden und eine lotrechte Rückwand durch eine gemeinsame flache Leitung gebildet, die ausgeht von der Unterkante einer Einsprühöffnung, ausgangsseitig hochgeführt ist und von oben in die auf einem verfahrbaren Wagen angebrachte Filtereinrichtung umgelenkt wird.

Auf der Kabinenseite weist die Vorderwand dieser Leitung eine rechteckförmige Öffnung auf, vor der mit Abstand eine allseitig über diese Öffnung vorragende Blende angebracht ist, die in der Wandebene einen die Öffnung rings umgebenden Absaugschlitz bildet, durch welchen Rohgas unmittelbar aus der Kabine in die Leitung abgesaugt wird. Der Einsaugquerschnitt an der Unterseite des Fensters ist jedoch größer als der zwischen Blende und innerer Kabinenwand gebildete Schlitzquerschnitt. Entsprechend größer ist die dort abgesaugte Menge Rohgas.

Zweck dieser älteren Vorrichtung ist es, eine verbesserte Vorrichtung zum Wiedergewinnen überschüssigen Sprühmaterials vorzusehen. Dabei wird aber das nicht am Werkstück haftende Pulver im weitaus überwiegenden Teil zunächst ausgeschieden und an großen Wandflächen entlanggeführt, wo es anhaften und durch den Luftstrom nur zum Teil wieder abgelöst werden kann, die Wandungen also in kürzeren Zeitabständen besonders abgereinigt werden müssen.

Die Erfindung geht aus von der eingangs definierten Pulversprühkabine, verfolgt aber zum Unterschied von der zuvor diskutierten Ausführung die Aufgabe, die Überleitung des mit dem überschüssigen Pulverpartikeln beladenen Rohgases in einer Abscheider-Saugströmung auf solche Weise zu bewerkstelligen, daß möglichst wenig Pulver am Kabinenboden bzw. an den Kabinen- oder Leitungswandungen niedergeschlagen wird und ein größerer Pulveranteil unmittelbar ohne Fremdkontakt zu einem Abscheider gelangt.

Die Lösung dieser Aufgabe ist durch das Kennzeichen des Anspruchs 1 gegeben.

Geht man von den bekannten Vorschlägen zur weitgehend laminaren Führung des pulverbeladenen Rohgases in der Kabine und am Werkstück entlang zur Auslaßöffnung aus, dann befasst sich die Erfindung in besonderem Maße damit, durch geeignete Ausbildung von Leitmitteln im Einwirkungsbereich der Auslaßöffnung auch diese Strömung so gleichmäßig zu gestalten, daß dort nur ge-ringe Pulvermengen ausgeschieden werden und der Rohgasstrom mit relativ hohem Pulveranteil in die Abscheider-Saugströmung gelangt. Da sich eine Verwirbelung des strömenden Rohgases bei verschiedenen Umlenkungen, vor allem am Werkstück nicht vollständig vermeiden läßt, ist es für die Überführung in die Saugströmung von besonderer Bedeutung, daß diese Strömung zunächst beruhigt wird. Eine gewisse Beruhigung wird auch nach der GB-PS 13 15 671 dadurch erreicht, daß man den Strömungsweg lang und einigermaßen gleichmäßig gestaltet. Dies erfordert jedoch großen Raumaufwand und läßt sich bei vielen Konstruktionen nicht verwirklichen.

Erfindungsgemäß werden daher im Umfangsbereich der Blende mehrere etwa radial zur Auslaßöffnung führende Absaugwege als Absaugöffnungen für Rohgas vorgesehen, deren Öffnungsfläche nach unten zum Kabinenboden hin zunimmt, und der Öffnungsquerschnitt wenigstens einer Absaugöffnung beziehungsweise eines Absaugweges wird einstellbar vorgesehen.

Im Prinzip läßt sich so die Auslaßströmung als etwa gleichmäßig in die Auslaßöffnung ausgebreiteter Radialströmung gestalten, wobei die einzelnen Strömungsfäden unter weitgehend gleichförmiger Querbelastung stehen und sich nahezu vollständig entspannen können. Dies hat die Auflösung nahezu der gesamten Verwirbelung der Absaugströmung zurfolge, wenn man insbesondere die gegebene Vorgabewerte und Verstellmöglichkeiten für einzelne Querschnitte und damit des Verhältnisses der Strömungsgeschwindigkeiten verschiedener Strömungswege in Betracht zieht.

Die Vergleichmäßigung der einzelnen Strömungen läßt sich auf verhältnismäßig einfache Weise dadurch erreichen, daß die Blende zum Kabinenboden hin im Sinne einer Querschnittsvergrößerung der Absaugöffnung schräggestellt wird.

Zweckmäßigerweise wird die Blende mit ihrem oberen Rand in einem Gelenk schwenkeinstellbar und in ihrer Neigungsstellung feststellbar aufgehängt. Je kleiner die Neigung der Blende zur Lotrechten ist, umso größer ist die Komponente der Aufwärtsströmung vom Kabinenboden her.

Bei einer Weiterbildung der Erfindung werden die Absaugöffnungen als dicht an der Umfangswand angeordnete Absaugschlitze ausgebildet. Auf diese Weise wird die Innenfläche der Umfangswand gründlich abgespült, so daß auch dort möglicherweise abgelagerte Pulverpartikel wieder gelöst und mit der Strömung weitergeführt werden.

Dabei können Weite und Länge der einzelnen Absaugöffnungen unterschiedlich gestaltet sein. Die individuelle Gestaltung und Bemessung dieser Absaugöffnungen läßt sich dann von den Strömungsverhältnissen in der jeweiligen Kabine abhängig machen.

Weite und/oder Länge der Absaugöffnungen können nahezu nach Bedarf unterschiedlich gestaltet sein. Wenigstens bei langgestreckter Kabinenform lassen sich Einlaß- und Auslaßöffnung waagerecht zueinander versetzt anordnen. Vorzugsweise ist jedoch die Auslaßöffnung über halber Sprühraumhöhe einmal dann anzuordnen, wenn die Auslaßöffnung nach einer bevorzugten Übung bei Zyklonkabinen noch höher liegt.

Die Einstellung der Öffnungsquerschnitte ist verhältnismäßig einfach bei ausgebogenen Wandteilen, die sich nach Bedarf mehr oder weniger weit verformen lassen und dann eine bequeme Anpassung der Absaugströmung an die Druck- und Strömungsverhältnisse in einem bestimmten Sprühraum ermöglichen. Auf diese Weise läßt sich schon die Tendenz zur Bildung von Strömungswirbeln unterdrücken und die einzelne Strömung in horizontaler und vertikaler Richtung einstellen.

Die Strömung kann ferner innerhalb des Sprühraumes auf verschiedene Weise so beeinflußt werden, daß die größere Pulvermenge unterhalb der Auslaßöffnung herabfällt. Dies läßt sich dadurch berücksichtigen, daß von der Auslaßöffnung bis wenigstens unter halbe Höhe zum Kabinenboden ein Absaugschacht mit einer wenigstens nach unten offenen Absaugöffnung herabgeführt wird. Auch bei großer Pulverdichte wird so oftmals ein ausreichendes Hochfördern in den Absaugbereich der Auslaßöffnung eröffnet.

Eine weitere Möglichkeit besteht darin, den Absaugschacht bis dicht über dem Kabinenboden herabzuführen und unter Bildung eines schmalen Absaugschlitzes gegenüber dem Kabinenboden mit einem Saugschuh zu verbreitern. Auf diese Weise kann mit einer Steigerung der Strömungsgeschwindigkeit unter dem Absaugschacht eine hohe Saugkraft entwickelt werden, durch die sich große Pulvermengen hochfördern lassen.

Es können aber auch die Absaugöffnungen längs des Absaugschachtes verteilt vorgesehen sein. So lassen sich etwa Absaugschlitze durch keilförmig ausgebogene Wandteile des Absaugschachtes bilden, welche die Strömung auf nahezu ganzer Höhe des Beschichtungsraumes zu diesen Absaugöffnungen hinführen, ohne daß scharf umgelenkt werden muß. Beispielsweise können die Absaugöffnungen im Anschlußbereich des Absaugschachtes an der Umfangswand vorgesehen sein. Es zeigen:
Fig. 1 einen Querschnitt durch eine erfindungsgemäße Beschichtungskabine nach der Linie I-I in Fig. 2,
Fig. 2 einen waagerechten Schnitt gemäß der Linie II-II in Fig. 1, und die
Fig. 3-8 entsprechende Schnitte durch Abwandlungen der Ausführungen Fig. 1 und 2 nach den in benachbarten Figuren angegebenen Schnittlinien.

Die in der Zeichnung dargestellte Pulversprühkabine (1) steht auf einem Untergestell (2) und weist einen Kabinenboden (3) auf, über dem ein Sprühraum (4) gebildet ist, der durch zwei Seitenwände (5,6) und Stirnwände (7,8), die insgesamt als Umfangswand (9) bezeichnet werden, und durch ein Kabinendach (10) begrenzt ist.

Durch einen am Kabinendach vorgesehenen Längsschlitz (13), von dem aus Durchlauföffnungen (14) in die Stirnwände (7,8) eingeformt sind, können an einer Transportvorrichtung hängende Werkstücke (15) kontinuierlich durch die Kabine hindurch gefahren werden.

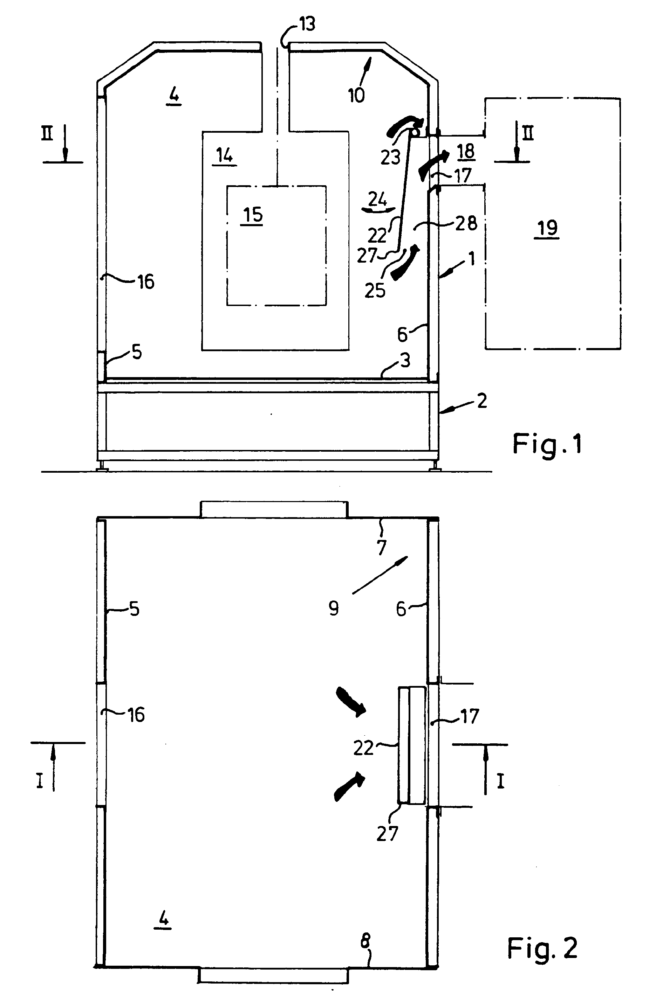

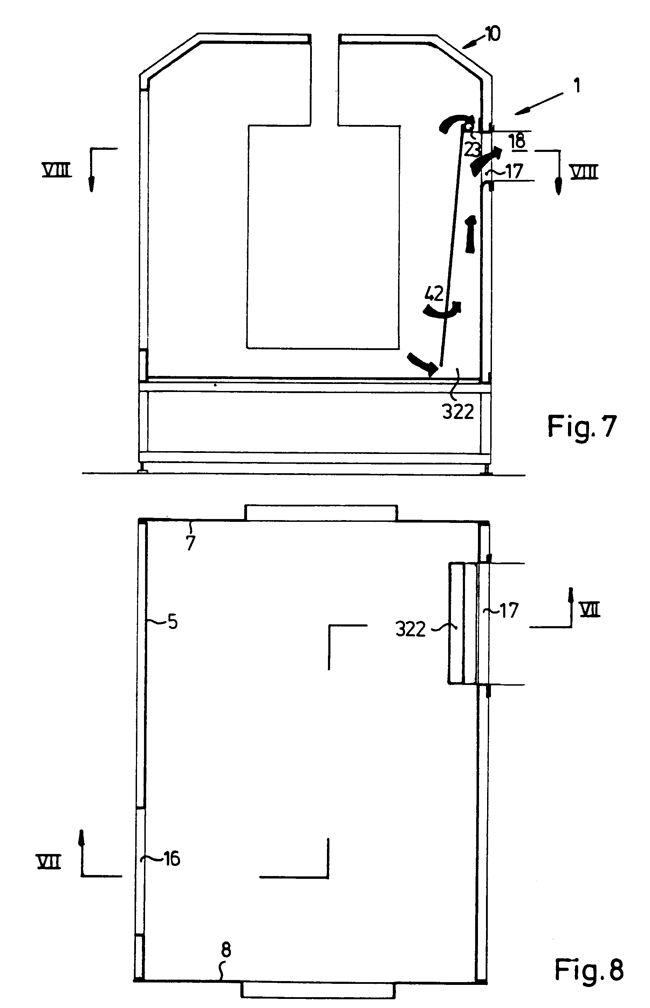

In der Seitenwand (5) ist eine Sprühöffnung (16), in der Seitenwand (6) eine Auslaßöffnung (17) eingeformt. Diese Öffnungen (16,17) sind wenigstens in Fig. 2 gegenüberliegend dargestellt, werden aber bei langgestreckten Kabinen oftmals so, wie in Fig. 8 gezeigt, in Kabinenlängsrichtung zueinander versetzt, oder es werden mehrere zu den Stirnwänden (7,8) hin versetzte Sprühöffnungen einer einzigen z.B. in einer Quermittelebene angeordneten Auslaßöffnung (17) zugeordnet. Zum Besprühen können manuell oder automatisch geführte Sprühgeräte, meist in Form von Pulversprühpistolen, aber auch andere Geräte eingesetzt werden, die das Pulver in die Kabinenluft oder ein anderes dort eingesetztes Gas einbringen. Ferner sind Vorrichtungen üblich, den Niederschlag des Pulvers auf dem Werkstück zu begünstigen, insbesondere die unterschiedliche elektrostatische Aufladung von Werkstück und Pulver, von der auch hier ausgegangen wird.

Von der Auslaßöffnung (17) führt eine Leitung (18) zu einem Pulverabscheider (19). Dies ist in der Regel ein Filteraggregat, kann aber auch z.B. ein Zyklonabscheider oder irgendeine andere geeignete Abscheidevorrichtung sein, die gegebenenfalls an die Kabine angebaut ist. Bedeutsam ist nur, daß durch Unterdruck an oder im Abscheider eine Saugluftströmung durch die Auslaßöffnung (17) hindurch erzeugt wird, so daß eine Luft- oder Gasströmung durch die restlichen Kabinenöffnungen in den Sprühraum (4) hinein und um das Werkstück (15) herum aufrecht erhalten wird. Eine gesonderte Auslaßleitung (18) ist demnach nicht notwendig.

Die Hauptströmung tritt durch die Sprühöffnung (16) ein, wo die Strömungsgeschwindigkeit des Tragmediums in der Regel durch das mittels einer oder mehrere Pulversprühpistolen für das Pulver verstärkt wird.

Eine vollständige laminare Strömung läßt sich bei Verwendung von Sprühpistolen mit konzentriertem Luftstrom auf dem ganzen Weg von der Sprühöffnung (16) bis zur Auslaßöffnung (17) nicht erzeugen. Man ist daher bestrebt, diese Strömung bis über den Bereich dieses Werkstückes hinaus wenigstens annähernd laminar mit etwa waagerechter Strömungsrichtung zu gestalten. Durch die Schwerkraft bedingt ändert sich jedenfalls in lotrechter Richtung die Strömungsrichtung, wobei zur Seitenwand (6) hin größere Mengen des versprühten und nicht am Werkstück haftenden Pulvers auf den Kabinenboden fallen und von dort weitergefördert und für eine erneute Verwendung bereitgestellt werden müssen.

Im Sprühraum (4) treten nun verschiedenartige Verwirbelungen auf, zunächst am Werkstück (15), bedingt durch dessen Form und Größe sowie die Art der Pulverzuführung. Weitere Verwirbelungen ergeben sich auf dem Weg zur Auslaßöffnung (17). Da diese Auslaßöffnung schon zu dem Zweck, die Strömung im Sprühraum möglichst waagerecht oder gar ansteigend zu halten, oberhalb der mittleren Kabinenebene vorgesehen ist, muß die Strömung zur Seitenwand (6) hin immer stärker ansteigend gehalten werden und dann verhältnismäßig scharf in die Auslaßöffnung (17) umgelenkt werden. Auch die seitliche Versetzung von Sprühöffnung und Auslaßöffnung nach Fig. 8 bringt zusätzliche Verwirbelung. Der Anteil des auf dem Kabinenboden (3) niedergeschlagenen Sprühpulvers an der gesamten Pulvermenge ist aber direkt abhängig vom Grad der Verwirbelung auf dem Weg in den Sprühraum. Dabei ist die Niederschlagsmenge an der Sprühöffnung am größten.

Um dem abzuhelfen, ist innerhalb des Sprühraumes (4) mit Abstand von der Seitenwand (6) bzw. der Umfangswand (9) eine Blende (22) angebracht, die hier die Form einer rechteckigen Platte aufweist, welche mit ihrem oberen Rand an einem Gelenk (23) aufgehängt ist. Sie kann gemäß Doppelpfeil (24) verschwenkt und durch irgendeine Hemmung in einer bestimmten Neigungsstellung festgestellt werden. Dabei ist die Blende mit ihrem unteren Rand (27) in der Regel leicht zum Inneren des Sprühraumes hin geneigt, so daß dort der Einlaßspalt (25) größer ist als im übrigen Randbereich der Blende. Dort führt man auch die größte Luftmenge ein und vom Bereich des Kabinenbodens (3) den größten Teil der dort niedergeschlagenen Pulverpartikel hoch.

Durch die Schwenkeinstellung am Gelenk (23) kann diese Verteilung und damit der jeweiligen Situation in einem Sprühraum angepasst werden.

Auch unabhängig von dieser Stellmöglichkeit gelangt das aus dem Sprühraum (4) abgezogene Rohgas am ganzen Rand oder aber an einem größeren Teil des Blendenrandes (27) in einen flachen, der Auslaßöffnung (17) vorgeschalteten Beruhigungsraum (28). In diesem Raum können sich die Einzelströmungen ausgleichen, wodurch die Verwirbelung so weit gemindert und wenigstens annähernd eine laminare Strömung erzielt wird, die sich auch unter Einfluß der Saugwirkung vom Abscheider (19) her das Strömungsverhalten nicht oder nur wenig ändert.

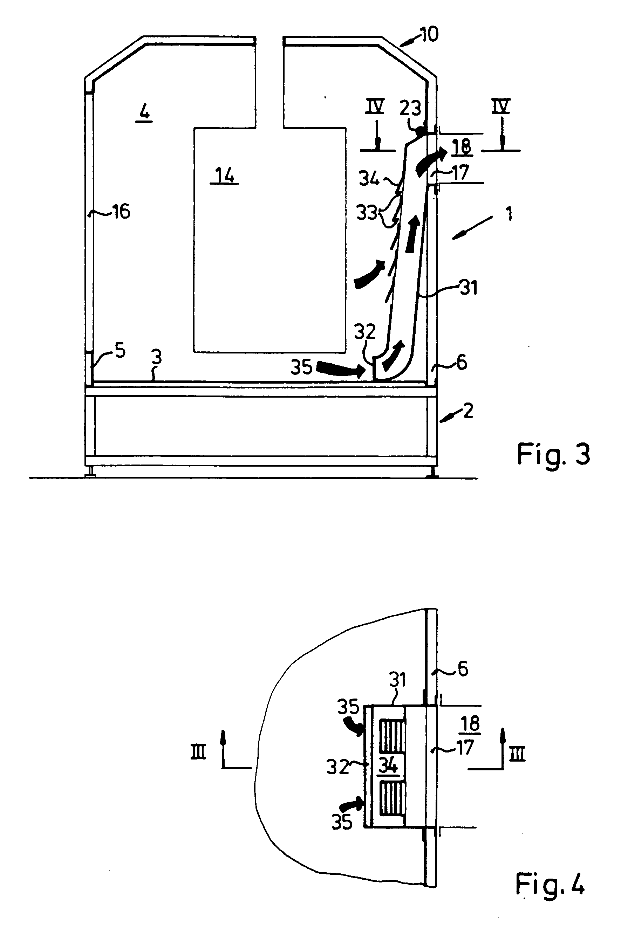

Nach Fig. 3 ist ein etwas schräggestellter rohrförmiger Absaugschacht (31) von seiner auf den Kabinenboden (3) aufliegenden gekrümmten Einsaugende (32) hier zur Auslaßöffnung (17) hochgeführt. Er ist auf wenigstens einer Seite mit einer Reihe übereinander liegenden Saugöffnungen (33) versehen, die durch keilförmig ausgebogene Leitlappen (34) gebildet sind. Hier wird eine durch die Pfeile (35) angedeutete ausgeprägte Haupt-Fege-Strömung unmittelbar auf dem Kabinenboden (3) erzeugt und am unteren ebenso wie am oberen Ende des Absaugschachtes (31) glattflächig umgelenkt.

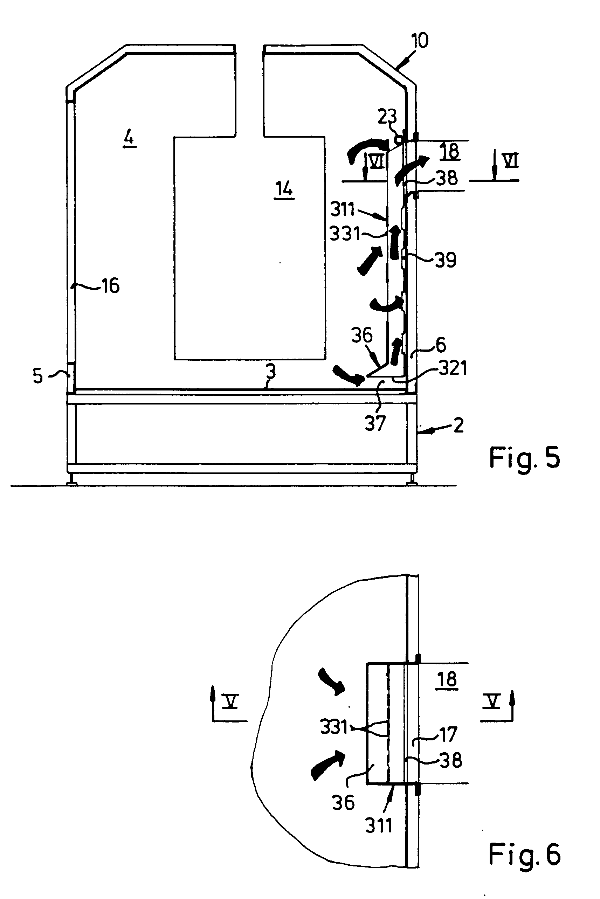

Bei der Ausführung nach Figur 5 ist der Absaugschacht dicht an der Seitenwand (6) und damit annähernd lotrecht, kann aber ebenso wie der Absaugschacht (31) nach Fig. 3 um das Gelenk (23) schwenkbar eingestellt werden. Er endet unten in einem Saugschuh (36), dessen Querschnitt sich zum Kabinenboden (3) hin vergrößert, und bildet, von diesem nur durch einen Saugspalt (37) getrennt, ein Saugende (321).

In den Vorderwänden sind Absaugöffnungen (331) angebracht und zur Seitenwand (6) hin wird ein lotrechter Schlitz (38) mit verbreiteten Spalten (39) gebildet. Auf diese Weise kann praktisch aus der ganzen Umgebung des Schachtes Rohgas eingesaugt werden, was schon dabei die Strömungsgeschwindigkeiten herabsetzt und vergleichmäßigt. Für besondere Zwecke können allerdings auch Absaugschächte ohne seitliche Absaugöffnungen eingesetzt werden.

Eine vergleichbare Ausführung ist in Fig. 7 gezeigt, wo der Pfeil (42) nur eine frontseitige Absaugöffnung erkennen läßt. In Fig. 8 stehen sich dabei die Sprühöffnung (16) und der Absaugschacht (322) nahezu diagonal gegenüber.

## Patentansprüche

1. Pulversprühkabine mit einer Leitvorrichtung zum Überführen von mit überschüssigen Pulverpartikeln beladenem Rohgas in eine Abscheider-Saugströmung, wobei über einem Kabinenboden (3) innerhalb einer Umfangswand (9) (Seitenwände 5,6, Stirnwände 7,8) ein Sprühraum (7) gebildet ist, im Bereich der Umfangswand (9) mindestens eine Einsprühöffnung (16) zum Einsprühen von Beschichtungspulver und eine Auslaßöffnung (17) für Rohgas vorgesehen sind und vor der Auslaßöffnung (17) mit Abstand von der Umfangswand (9) eine Blende (22) angebracht ist, die in mehreren Richtungen über den Rand der Auslaßöffnung (17) hinausragt; dadurch gekennzeichnet, daß im Umfangsbereich der Blende (22) mehrere etwa radial zur Auslaßöffnung (17) führende Absaugwege (25,33) mit Absaugöffnungen (38,39) für Rohgas vorgesehen sind, deren Öffnungsfläche nach unten zum Kabinenboden (3) hin zunimmt, und daß der Öffnungsquerschnitt wenigstens einer Absaugöffnung (33, 331) bzw. eines Absaugweges (25) einstellbar vorgesehen ist.

2. Pulversprühkabine nach Anspruch 1, dadurch gekennzeichnet, daß die Blende (22) zum Kabinenboden (3) hin im Sinne einer Querschnittsveränderung der Absaugöffnung (33,25) schräggestellt ist.

3. Pulversprühkabine nach Anspruch 1 oder 2, dadurch gekennzeichnet, daß die Blende (22) mit ihrem oberen Rand in einem Gelenk (23) schwenkeinstellbar und in ihrer Neigungsstellung feststellbar aufgehängt ist.

4. Pulversprühkabine nach Anspruch 1, 2 oder 3, dadurch gekennzeichnet, daß die Absaugöffnungen als dicht an der Umfangswand (9) angeordnete Absaugschlitze (38,39) ausgebildet sind.

5. Pulversprühkabine nach einem der Ansprüche 1 bis 4, dadurch gekennzeichnet, daß Weite und/oder Länge der Absaugöffnungen (38,39) unterschiedlich gestaltet sind.

6. Pulversprühkabine nach einem der Ansprüche 1 bis 5, dadurch gekennzeichnet, daß wenigstens bei langgestreckter Kabinenform Einlaß- und Auslaßöffnung (16,17) waagerecht zueinander versetzt angeordnet sind.

7. Pulversprühkabine nach einem der Ansprüche 1 bis 6, dadurch gekennzeichnet, daß die Auslaßöffnung (17) über halber Sprühraumhöhe angeordnet ist.

8. Pulversprühkabine nach einem der Ansprüche 1 bis 7, dadurch gekennzeichnet, daß von der Auslaßöffnung (17) bis wenigstens unter halbe Höhe zum Kabinenboden (3) ein Absaugschacht (31,311) mit einer wenigstens unteren Absaugöffnung (32,321) herabgeführt ist.

9. Pulversprühkabine nach Anspruch 8, dadurch gekennzeichnet, daß der Absaugschacht bis dicht über dem Kabinenboden herabgeführt und unter Bildung eines schmalen Absaugschlitzes (37) gegenüber dem Kabinenboden (3) zu einem Saugschuh (36) verbreitert ist.

10. Pulversprühkabine nach einem der Ansprüche 1 bis 9, dadurch gekennzeichnet, daß Absaugöffnungen (33) längs des Absaugschachtes (31,311) verteilt vorgesehen sind.

11. Pulversprühkabine nach Anspruch 10, dadurch gekennzeichnet, daß Absaugschlitze durch keilförmig ausgebogene Wandteile (34) des Absaugschachtes (31) gebildet sind.

12. Pulversprühkabine nach Anspruch 11, dadurch gekennzeichnet, daß Absaugöffnungen (38,39) im Anschlußbereich des Absaugschachtes (31) an der Umfangswand (9) vorgesehen sind.

## Claims

1. Powder spraying booth, including an arrangement for guiding crude gas, charged with surplus powder particles, into a suction flow of a separator, a spray chamber (7) being formed over a booth floor (3) internally of a circumferential wall (9) (lateral walls 5,6, end walls 7,8), there being provided in the region of the circumferential wall (9) at least one inlet aperture (16) for the spraying-in of coating powder and one outlet aperture (17) for crude gas, and a screen (22) being mounted upstream of the outlet aperture (17) at a spacing from the circumferential wall (9) and protruding beyond the edge of the outlet aperture (17) in a plurality of directions; characterised in that a plurality of suction paths (25, 33), which extend substantially radially relative to the outlet aperture (17), are provided in the circumferential region of the screen (22) with suction apertures (38, 39) for crude gas, the area of opening of said apertures increasing downwardly towards the booth floor (3), and in that the cross-section of opening of at least one suction aperture (33, 331), or respectively one suction path (25), is adjustable.

2. Powder spraying booth according to claim 1, characterised in that the screen (22) is inclined towards the booth floor (3) in accordance with a change in the cross-sectional area of the suction aperture (33, 25).

3. Powder spraying booth according to claim 1 or 2, characterised in that the screen (22) is mounted by its upper edge so as to be pivotable in a pivot joint (23) and securable in its position of inclination.

4. Powder spraying booth according to claim 1, 2 or 3, characterised in that the suction apertures are in the form of suction slots (38, 39), which are disposed close to the circumferential wall (9).

5. Powder spraying booth according to one of claims 1 to 4, characterised in that the widths and/or lengths of the suction apertures (38, 39) are variable.

6. Powder spraying booth according to one of claims 1 to 5, characterised in that, at least when the booth has an elongate configuration, the inlet and outlet apertures (16, 17) are disposed in a horizontally offset manner relative to each other.

7. Powder spraying booth according to one of claims 1 to 6, characterised in that the outlet aperture (17) is disposed more than halfway up the spray chamber.

8. Powder spraying booth according to one of claims 1 to 7, characterised in that a suction shaft (31, 311), having at least one lower suction aperture (32, 321), extends downwardly from the outlet aperture (17) to less than halfway from the booth floor (3).

9. Powder spraying booth according to claim 8, characterised in that the suction shaft extends downwardly to a position close to the booth floor and is widened to form a suction shoe (36), thereby forming a narrow suction slot (37) relative to the booth floor (3).

10. Powder spraying booth according to one of claims 1 to 9, characterised in that suction apertures (33) are distributed longitudinally of the suction shaft (31, 311).

11. Powder spraying booth according to claim 10, characterised in that suction slots are formed by wall portions (34) of the suction shaft (31) which are bent in a wedge-shaped manner.

12. Powder spraying booth according to claim 11, characterised in that suction apertures (38, 39) are provided in the region where the suction shaft (31) is connected to the circumferential wall (9).

## Revendications

1. Cabine de projection de poudre, comportant un dispositif de guidage pour conduire du gaz brut chargé de particules excédentaires de poudre à un courant d'aspiration d'un séparateur, où une chambre de projection (7) est formée au-dessus d'un fond (3) de la cabine à l'intérieur d'une paroi périphérique (9) (parois latérales 5, 6, parois frontales 7, 8), où la paroi périphérique (9) comporte au moins une ouverture de projection (16) pour la projection de poudre de revêtement et une ouverture de sortie (17) pour le gaz brut, et où un écran (22) est disposé à distance de la paroi périphérique (9) devant l'ouverture de sortie (17) et s'étend dans plusieurs directions au-delà du bord de l'ouverture de sortie (17), caractérisée en ce que plusieurs chemins d'aspiration (25, 33) conduisant sensiblement radialement à l'ouverture de sortie (17) et pourvus d'ouvertures d'aspiration (38, 39) pour le gaz brut sont prévus sur le pourtour de l'écran (22), la surface de leurs ouvertures étant croissante vers le bas en direction du fond (3) de la cabine, et en ce que la section d'au moins une ouverture d'aspiration (33, 331) ou d'un chemin d'aspiration (25) est réglable.

2. Cabine selon la revendication 1, caractérisée en ce que l'écran (22) est incliné en direction du fond (3) de la cabine, dans le sens d'une variation de section de l'ouverture d'aspiration (33, 25).

3. Cabine selon la revendication 1 ou 2, caractérisée en ce que l'écran (22) est réglable en pivotement sur une articulation (23) à son bord supérieur et est suspendu de manière à être fixé dans sa position d'inclinaison.

4. Cabine selon la revendication 1, 2 ou 3, caractérisée en ce que les ouvertures d'aspiration sont formées par des fentes d'aspiration (38, 39) disposées tout près de la paroi périphérique (9).

5. Cabine selon l'une des revendications 1 à 4, caractérisée en ce que les ouvertures d'aspiration (38, 39) ont des dimensions différentes en largeur et/ou en longueur.

6. Cabine selon l'une des revendications 1 à 5, caractérisée en ce qu'au moins, dans le cas où la cabine a une forme allongée, les ouvertures d'entrée et de sortie (16, 17) sont mutuellement décalées horizontalement.

7. Cabine selon l'une des revendications 1 à 6, caractérisée en ce que l'ouverture de sortie (17) est placée plus haut que la mi-hauteur de la chambre de projection.

8. Cabine selon l'une des revendications 1 à 7, caractérisée en ce qu'une cheminée d'aspiration (31, 311) , pourvue d'au moins une ouverture inférieure d'aspiration (32, 321), descend de l'ouverture de sortie (17) au moins jusqu'à un niveau inférieur à la mi-hauteur par rapport au fond (3) de la cabine.

9. Cabine selon la revendication 8, caractérisée en ce que la cheminée d'aspiration descend jusqu'au voisinage du fond de la cabine, au-dessus de ce fond, et présente une embouchure aspirante élargie (36) en face du fond (3) pour former une mince fente d'aspiration (37).

10. Cabine selon l'une des revendications 1 à 9, caractérisée en ce que des ouvertures d'aspiration (33) sont réparties le long de la cheminée d'aspiration (31, 311).

11. Cabine selon la revendication 10, caractérisée en ce que des fentes d'aspiration sont formées par des parties pliées en biais vers l'extérieur (34) de la paroi de la cheminée d'aspiration (31).

12. Cabine selon la revendication 11, caractérisée en ce que des ouvertures d'aspiration (38, 39) sont prévues dans la zone de jonction de la cheminée d'aspiration (31) à la paroi périphérique (9).
